# EUROPEAN PATENT APPLICATION

(11) **EP 1 699 021 A1**
(43) Date of publication of application: **06.09.2006**
(21) Application number: 06251103.5
(22) Date of filing: 01.03.2006
(51) Int. Cl.: G07F 9/02, H04L 12/56, H04L 12/28, H04L 29/06

(54) **Connection adapter for communication device**

(30) Priority: 02.03.2005 JP 2005058078
(71) Applicant: Sanden Corporation, Isesaki-shi, Gunma 372-8502 (JP)
(72) Inventor: Nakajima, Kazuya, Isesaki-shi Gunma 372-8502 (JP); Tabata, Masaru, Isesaki-shi Gunma 372-8502 (JP); Iwasaki, Wataru, Isesaki-shi Gunma 372-8502 (JP); Suzuki, Kiyoshi, Isesaki-shi Gunma 372-8502 (JP); Kuwako, Yuuji, Isesaki-shi Gunma 372-8502 (JP)
(74) Representative: Haley, Stephen

(57) **Abstract**

A connection adapter (1) includes first interfaces (121, 122, 123,411,412,413), second interfaces (210, 310) for connection to communication devices (92, 93, 94) connected to a radio packet communication network, and a conversion circuit (110) performing mutual conversion between an input/output signal from or to high-level equipment and an input/output signal from or to the communication device. The conversion circuit (110) receives or supplies from or to the high-level equipment a signal simulating the communication device connectable to the high-level equipment and receives or supplies from or to the communication device a signal simulating the high-level equipment connectable to the communication device.

## Description

The present invention relates to the field of telemetering used in collecting of sales information of an automatic vending machine, etc., and the field of telematics used in delivering of traffic information to mobile objects, etc., and more particularly to a connection adapter connecting a communication device used in these fields to high-level equipment using the communication device.

In recent years, telemetering and telematics used in collecting or delivering information via radio packet communication network are diffusing. Originally, systems for acquiring a measured value of measuring instrument via communication line have been collectively called as telemetering. Recently, however, the term "telemetering" is generally used to indicate not only acquiring of data but also monitoring of operation and remote control of a device. Examples of telemetering mainly include a sales management system for an automatic vending machine, a consumption management system for gas, water or the like, and a management system for an unmanned parking lot. As for an example of sales management system for an automatic vending machine, refer to Japanese Patent Publication 2003-51056. The term "telematics" means real-time provision of information service by combining a communication system with mobile objects such as a vehicle. Examples of telematics mainly include a vehicle-mounted information system for providing in real-time, traffic information, navigation information and the like to a terminal installed in a vehicle.

In such field, a communication device for connection to a radio packet communication network, and high-level equipment using the communication device are needed in a remote area. The high-level equipment corresponds to DTE (Data Terminal Equipment); the communication device corresponds to DCE (Data Circuit-terminating Equipment) . For example, in a sales management system for an automatic vending machine, the control equipment performing sales control or controlling temperature inside the vending machine corresponds to the high-level equipment.

The standard, service configuration and the like of radio packet communication networks vary according to carriers (communication common carriers). Accordingly, the standard and operation of communication devices also vary according to carriers. Consequently, to design high-level equipment, a carrier and a communication device are preliminarily selected to be used and the high-level equipment is made to support the communication device.

In recent years, there have been requests to change the carrier after constructing such system. The reasons for this include, for example, "the condition of radio wave provided by the carrier in the location of placement of the high-level equipment is unstable and inappropriate."

However, the change of carrier necessitates the change of communication device; thus the high-level equipment, again, must be changed or modified. High-level equipment is placed, due to the properties of such system, in remote areas in a dispersed manner. Accordingly, when a large number of high-level equipment have already been installed in the market, it takes a significant amount of work to change or modify the high-level equipment. Not only the change of carrier but also the change of model of communication device may cause a similar problem even if the same carrier is used. This problem can also take place when the change of carrier or model is made in the future. Carrier and model must thus be cautiously selected to construct a system. Also, when a system using plural carriers or communication devices is constructed, high-level equipment compatible with each carrier or communication device must be separately prepared, leading to increased cost.

An object of the present invention is to provide a connection adapter connecting high-level equipment and a communication device so that a plurality of types of communication devices can be used without changing or modifying the high-level equipment.

To achieve the above object, a connection adapter according to the present invention comprises: a first interface for connection to high-level equipment with a communication interface; a second interface for connection to a communication device with an interface for high-level equipment, connected to a radio packet communication network; and a conversion circuit performing mutual conversion between an input/output signal from or to the high-level equipment connected to the first interface and an input/output signal from or to the communication device connected to the second interface. The conversion circuit receives or supplies from or to the high-level equipment a signal simulating the communication device connectable to the high-level equipment, and receives or supplies from or to the communication device a signal simulating the high-level equipment connectable to the communication device.

According to the present invention, the conversion circuit of the connection adapter lying between high-level equipment and a communication device converts an input/output signal therebetween. Herein, the conversion circuit receives or supplies from or to the high-level equipment a signal simulating the communication device connectable to the high-level equipment and receives or supplies from or to the communication device a signal simulating the high-level equipment connectable to the communication device. Accordingly, by virtue of provision of the connection adapter, the high-level equipment can be connected to a communication device not basically connectable thereto, without any change or modification of the high-level equipment.

Other objects, configurations and advantageous effects of the present invention will be apparent when the following detailed description of the invention is considered.

### In the Drawings;

Fig. 1 is a schematic configuration diagram of a connection adapter for a communication device according to First Embodiment;
Fig. 2 is a configuration diagram of a main control unit implemented using FPGA;
Fig. 3 is a schematic configuration diagram of a connection adapter for a communication device according to Second Embodiment;
Fig. 4 is a schematic configuration diagram of a connection adapter for a communication device according to Third Embodiment; and
Fig. 5 is a schematic configuration diagram of a connection adapter for a communication device according to Fourth Embodiment.

### (First Embodiment)

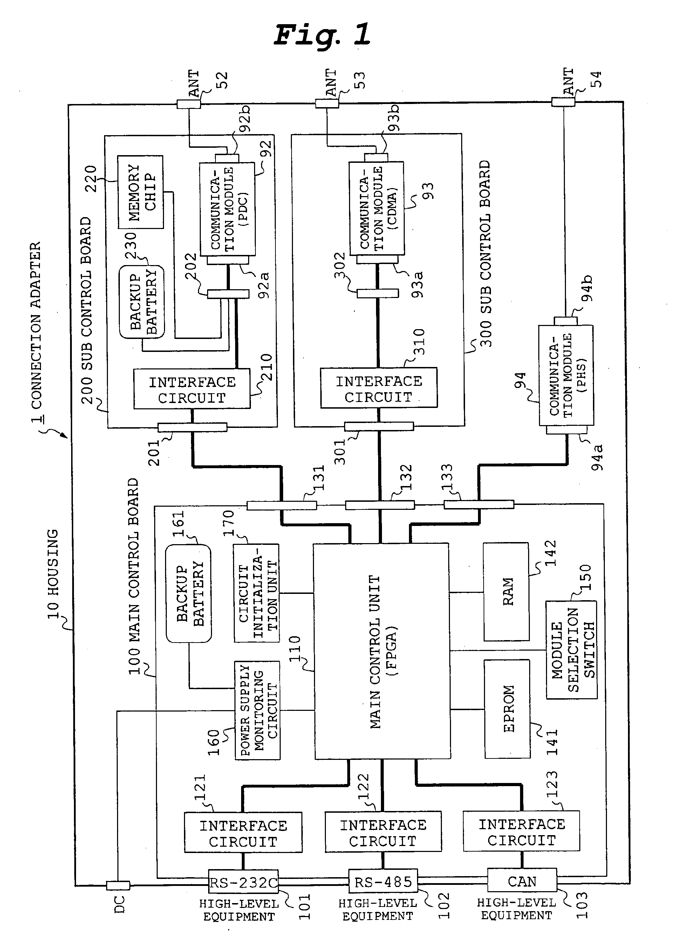

A connection adapter according to one embodiment of the present invention will be described with reference to the drawings. Fig. 1 is a schematic configuration diagram of the connection adapter.

A connection adapter 1 is equipment connecting a plurality of types of high-level equipment and a plurality of types of communication devices. The high-level equipment is equipment which communicates using a communication device, and corresponds to DTE (Data Terminal Equipment). Examples of high-level equipment include, for example, control equipment for an automatic vending machine. The communication device is a device for connection to a communication network and corresponds to DCE (Data Circuit-terminating Equipment).

The connection adapter 1 according to the present embodiment supports a communication module 92 of PDC (Personal Digital Cellular) standard, a communication module 93 of CDMA (Code Division Multiple Access) standard, and a communication module 94 of PHS (Personal Handy-phone System) standard. The communication modules 92, 93 and 94 are each a communication device connected to a radio packet communication network constructed by a respective corresponding carrier, and each support the communication standard and communication protocol service defined independently by each carrier. Accordingly, high-level equipment of conventional art created, for example, for the communication module 92 of PDC standard cannot use the communication module 93 of CDMA standard. The connection adapter 1 according to the present invention solves such problems and allows high-level equipment created for a specific communication device to be connected to another communication device. The connection adapter 1 will be described below in detail.

Fig. 1 shows the three communication modules 92, 93 and 94 incorporated in the connection adapter 1. High-level equipment connected to the connection adapter 1 can be connected to a radio packet communication network by using one selected from among the three communication modules 92, 93 and 94.

Within a housing 10, the connection adapter 1 includes a main control board 100, a sub control board 200 for mounting a communication module 92 of PDC standard, a sub control board 300 for mounting a communication module 93 of CDMA standard, and a communication module 94 of PHS standard. The sub control boards 200 and 300, and the communication module 94 are provided detachably from the main control board 100.

The connection adapter 1 further includes a plurality of types of high-level equipment connection connectors allowing connection to a plurality of types of high-level equipment. Specifically, the main control board 100 is provided with a connector 101 used in RS-232C standard, a connector 102 used in RS-485 standard, and a connector 103 used in CAN (Controller Area Network) standard.

The main control board 100 further includes a main control unit 110 implemented using FPGA (Field Programmable Gate Array) being one kind of PLD (Programmable Logic Device), an interface circuit 121 of RS-232C standard, an interface circuit 122 of RS-485 standard, and an interface circuit 123 of CAN standard. The interface circuits 121, 122 and 123 each lie between the main control unit 110 and each of the corresponding connectors 101, 102 and 103. Accordingly, the main control unit 110 can communicate with high-level equipment connected to the connector 101, 102 or 103 via each of the interface circuits 121, 122 and 123.

The main control board 100 is further provided with a connector 131 for connection to the sub control board 200, a connector 132 for connection to the sub control board 300, and a connector 133 for connection to the communication module 94 of PHS standard. The connectors 131, 132 and 133 are each connected to the main control unit 110. Accordingly, the main control unit 110 can communicate with the communication module 92 of PDC standard via the sub control board 200, and can communicate with the communication module 93 of CDMA standard via the sub control board 300, and can directly communicate with the communication module 94 of PHS standard.

The main control board 100 further includes an EPROM 141 having stored therein a control program for the main control unit 110, and an RAM 142 used as various work areas of the main control unit 110. In addition, the main control board 100 is provided with a module selection switch 150 for selecting one from among the communication modules 92, 93 and 94. The main control unit 110 operates according to which one from among the communication modules 92, 93 and 94 is selected by the module selection switch 150. The configuration and operation of the main control unit 110 will be described later.

The main control board 100 also operates by receiving DC power from the outside. The main control board 100 supplies DC power to the sub control board 200 via the connector 131, to the sub control board 300 via the connector 132, and to the communication module 94 of PHS standard via the connector 133. The main control board 100 further includes a power supply monitoring circuit 160 monitoring an interruption of DC power supply from the outside, and a backup battery 161. When an interruption of DC power supply from the outside is detected, the power supply monitoring circuit 160 causes the backup battery 161 to supply power to the main control board 100, the sub control boards 200 and 300, and the communication module 94 of PHS standard. Also, when an interruption of DC power supply from the outside is detected, the power supply monitoring circuit 160 notifies the interruption to the main control unit 110. When the recovery of power supply from the outside is detected after the occurrence of power supply interruption, the power supply monitoring circuit 160 further notifies the recovery to the main control unit 110. The operation of the main control unit 110 when receiving the notification will be described later.

The main control board 100 further includes a circuit initialization unit 170 for initializing and creating the internal circuit of the main control unit 110 implemented using FPGA. The circuit initialization unit 170 has incorporated therein a program for initializing and creating the internal circuit of the main control unit 110, and creates within FPGA a circuit constituting the main control unit 110, when it is detected that the circuit has not been created yet within FPGA at the time when power supply is turned on, or in response to an instruction from a terminal (not shown) connected to the outside.

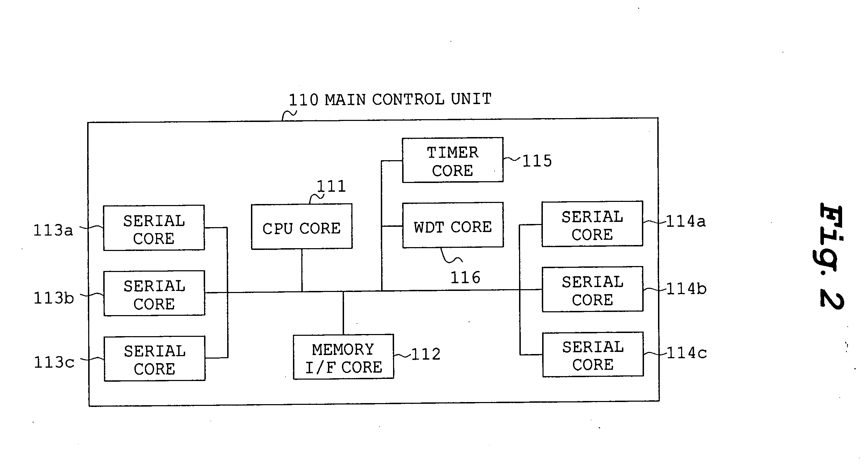

Fig. 2 is a configuration diagram of the internal circuit of the main control unit 110. As shown in Fig. 2, the main control unit 110 includes a software CPU core 111, a memory interface core 112 for connection to the EPROM 141 and RAM 142, serial cores 113a, 113b and 113c for connection to the interface circuits 121, 122 and 123, respectively, and cores 114a, 114b and 114c for connection to the communication modules 92, 93 and 94, respectively, and a timer core 115, and a watchdog timer core 116,

The sub control board 200 serves to connect the main control board 100 and the communication module 92 of PDC standard. The sub control board 200 includes a connector 201 for connection to the main control board 100, a connector 202 for connection to a terminal 92a of the communication module 92 of PDC standard, and an interface circuit 210 connecting the main control board 100 and the communication module 92. The interface circuit 210 serves to convert the number and/or assignment of pins between the connector 202 and connector 201, and to shape waveforms. Here, assume that the communication module 92 according to the present embodiment is based on a standard requiring a predetermined memory chip having stored therein telephone number information and the like, and a dedicated backup battery. In order to meet this standard, in the sub control board 200, the memory chip 220 and the backup battery 230 are constructed to connect to the communication module 92 via the connector 202. As described above, the sub control board 200 also operates by receiving DC power from the main control board 100. Also, the sub control board 200 supplies DC power to the communication module 92 via the connector 202. An antenna connection terminal 92b of the communication module 92 is connected to an antenna connection terminal 52 attached to the housing 10.

The sub control board 300 serves to connect the main control board 100 and the communication module 93 of CDMA standard. The sub control board 300 includes a connector 301 for connection to the main control board 100, a connector 302 for connection to a terminal 93a of the communication module 93 of CDMA standard, and an interface circuit 310 connecting the main control board 100 and the communication module 93. The interface circuit 310 serves to convert the number and/or assignment of pins between the connector 302 and connector 301, and to shape waveforms. As described above, the sub control board 300 also operates by receiving DC power from the main control board 100. Also, the sub control board 300 supplies DC power to the communication module 93 via the connector 302. An antenna connection terminal 93b of the communication module 93 is connected to an antenna connection terminal 53 attached to the housing 10.

A terminal 94a of the communication module 94 of PHS standard is connected to a connector 133 of the main control board 100. An antenna connection terminal 94b of the communication module 94 is connected to an antenna connection terminal 54 attached to the housing 10.

The operation of the main control unit 110 will now be described. As described above, the main control unit 110 operates based on the control program stored in the EPROM 141. Specifically, the main control unit 110 performs mutual conversion between an input/output signal from or to the communication module 92, 93 or 94 selected by the module selection switch 150 and an input/output signal from or to high-level equipment connected to the connecter 101, 102 or 103. In this conversion processing, each input/output signal is simulated so that when viewed from the high-level equipment, it looks like the high-level equipment directly communicates with the connectable communication module, and when viewed from the communication module, it looks like the communication module directly communicates with the connectable high-level equipment.

For example, assume that: the calling AT command of the communication module 92 of PDC standard is "ATDT03XXXXYYYY"; high-level equipment connected to the connection adapter 1 is designed for use in the communication module 92; a calling AT command of the communication module 93 of CDMA standard is "ATD9999"; and the communication module 93 of CDMA standard is to be selected by the module selection switch 150 to use the communication module 93 as a communication device.

In this case, when receiving the calling command "ATDT03XXXXYYYY" from the high-level equipment, the main control unit 110 converts the command into "ATD9999" for the communication module 93 of CDMA standard and sends it to the communication module 93. When the format of ACK message from the communication module 93 of CDMA standard is different from that from the communication module 92 of PDC standard, the main control unit 110 further converts the format of ACK message sent from the communication module 93 of CDMA standard into a format equivalent to that for the communication module 92 of PDC standard, and sends it to the high-level equipment. By virtue of such mutual conversion processing, high-level equipment designed originally for use in the communication module 92 of PDC standard can be connected to the communication module 93 of CDMA standard. Various predetermined information, such as calling destination telephone number and communication destination address, usually varies depending on the communication modules 92, 93 and 94. In order to cope with this, the predetermined information may be stored in the EPROM 141, whereby the predetermined information is properly selected to be used.

When the power supply monitoring circuit 160 detects a power supply interruption, and thus a switchover is made to the drive by the backup battery 161, then the main control unit 110 notifies the power supply interruption to a predetermined communication destination by using a communication module selected by the module selection switch 150. While the drive is performed by the backup battery 161 after the power supply monitoring circuit 160 detects a power supply interruption, when a connection to a predetermined communication destination is detected, the main control unit 110 performs no conversion processing with respect to this communication, and sends an ACK to the communication destination on behalf of the high-level equipment. Also, when the recovery of power supply is detected by the power supply monitoring circuit 160, the main control unit 110 notifies the recovery of power supply to the predetermined communication destination by using a communication module selected by the module selection switch 150.

As described above, according to the connection adapter 1 according to the present embodiment, even high-level equipment compatible only with a communication module of specific model can selectively use a plurality of types of communication modules 92, 93 and 94 without modification of the high-level equipment. The selection from among the communication modules 92, 93 and 94 can easily be made by the module selection switch 150. In addition, a plurality of interfaces for high-level equipment are provided, so a variety of high-level equipment can be connected.

When a power supply interruption occurs, the connection adapter 1 according to the present embodiment is further driven by the backup battery 161, and notifies the power supply interruption to a predetermined communication destination. While a power supply interruption continues, when a connection by a predetermined communication destination is detected, the connection adapter 1 sends back an ACK on behalf of the high-level equipment. Generally, the connection adapter 1 and high-level equipment often share a common power supply. However, the connection adapter 1 according to the present embodiment operates even when the high-level equipment stops operating due to power supply interruption. Accordingly, the communication destination can quickly perceive an occurrence of trouble at the high-level equipment, thus providing a preferable operation.

According to the present embodiment, three communication modules 92, 93 and 94 are incorporated within the connection adapter 1. In many practical operations, however, it is sufficient to have one communication module. In the connection adapter 1 according to the present embodiment, the sub control board 200 having mounted thereon the communication module 92, the sub control board 300 having mounted thereon the communication module 93, and the communication module 94 are each detachably provided using the connectors. Thus only necessary one from among the sub control boards 200 and 300 and the communication module 94 may be attached. In this manner, only any one of the communication modules 92, 93 and 94 to be practically used is attached, thus making it possible to achieve the reduction of size.

### (Second Embodiment)

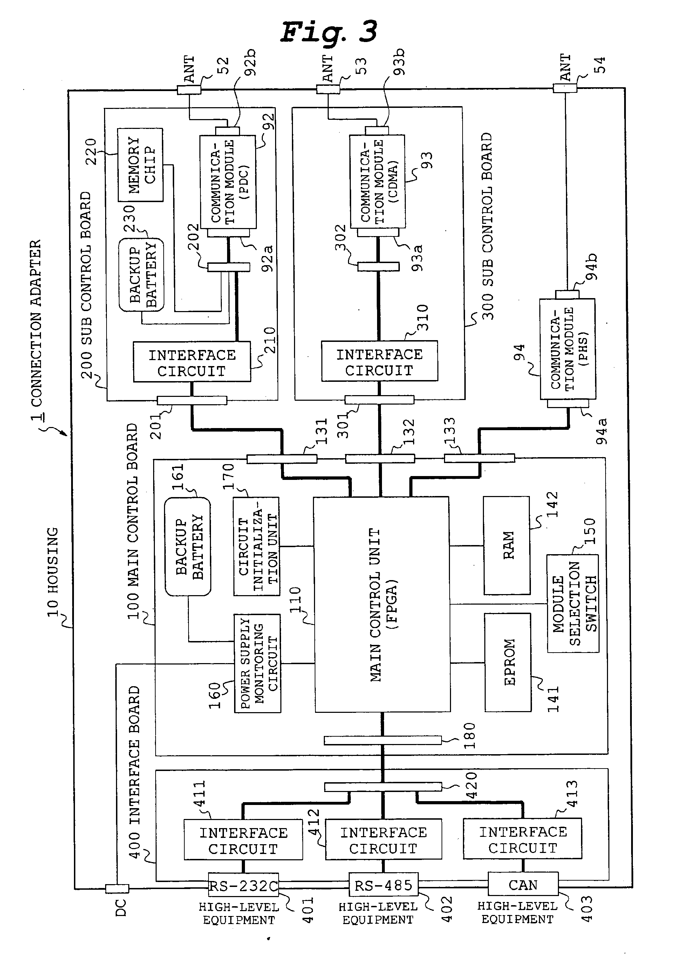

A connection adapter according to Second Embodiment of the present invention will be described with reference to Fig. 3. Fig. 3 is a schematic configuration diagram of the connection adapter.

The difference of the connection adapter according to the present embodiment from that of First Embodiment lies in that an interface in the high-level equipment side is mounted on a different board from the main control board 100. More specifically, as shown in Fig. 3, an interface board 400 is provided with a connector 401 used in RS-232C standard, a connector 402 used in RS-485 standard, and a connector 403 used in CAN (Controller Area Network) standard. The interface board 400 further includes an interface circuit 411 of RS-232C standard, an interface circuit 412 of RS-485 standard, and an interface circuit 413 of CAN standard. The interface circuits 411, 412 and 413 are each connected to the main control unit 110 via a connector 420 provided in the interface board 400 and a connector 180 provided in the main control board 100. In other aspects, the configuration is the same as that of First Embodiment.

In the connection adapter 1 according to the present embodiment, the interfaces in the high-level equipment side are mounted on the interface board 400 arranged separately from the main control board 100. Accordingly, it is possible to easily handle high-level equipment having a variety of interfaces. Other operations and effects are the same as those of First Embodiment.

### (Third Embodiment)

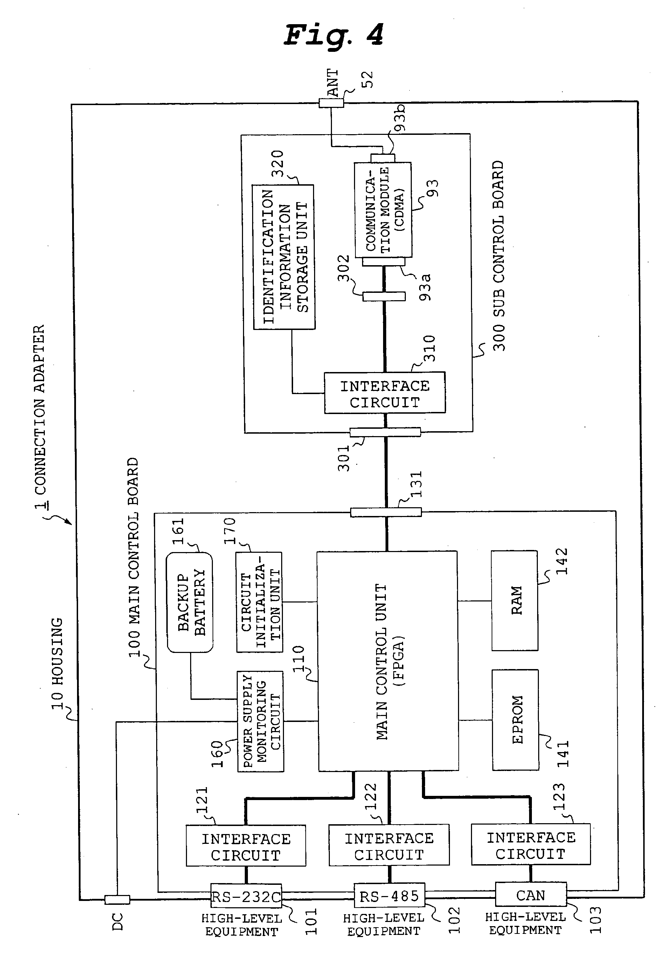

A connection adapter according to Third Embodiment of the present invention will be described with reference to Fig. 4. Fig. 4 is a schematic configuration diagram of the connection adapter.

The difference of the connection adapter according to the present embodiment from that of First Embodiment lies in that the number of connectable communication modules is only one. Accordingly, the main control board 100 is provided in the communication module side thereof with only one connector 131. Connectable to this connector 131 is any one of the aforementioned sub control board 200 having mounted thereon the communication module 92 of PDC standard, the sub control board 300 having mounted thereon the communication module 93 of CDMA standard and the communication module 94 of PHS standard. In Fig. 4, there is shown an example in which the sub control board 300 is attached.

In the connection adapter 1 according to the present embodiment, a communication module connected thereto is automatically identified. To implement such function, each of the sub control boards 200 and 300 is provided with an identification information storage unit (reference numeral 320 in the example of Fig. 4) having stored therein identification information for identifying each sub control board, i.e., each communication module. Methods for storing identification information include one for storing identification information in a storage device, such as ROM, and one for holding identification information by using a combination of ON/OFF in a DIP switch (this is a simpler method).

In such configuration, when the main control unit 110 reads identification information from the sub control board 200 or 300 connected via the connector 131, then it is possible to identify which one of the sub control boards 200 and 300 has been connected, i.e., which one of the communication modules 92 and 93 has been connected. The communication module 94 of PHS standard is connected to the main control board 100 without a sub control board lying therebetween, so identification information cannot be acquired. Consequently, when identification information cannot be acquired from the connection destination of the connector 131, the main control unit 110 determines that the communication module 94 of PHS standard has been connected. Accordingly, in the present embodiment, the module selection switch 150 provided in First Embodiment is not required. In other aspects, the configuration is the same as that of First Embodiment.

According to the connection adapter 1 of the present embodiment, the housing space of the communication modules 92, 93 and 94 can be reduced, thus contributing to size reduction of the connection adapter 1. Also, the communication modules 92, 93 and 94 connected to the main control board 100 can be automatically identified. Accordingly, when mounting or replacing a module, it is possible to prevent an improper setting for a different model from occurring. Other operations and effects are the same as those of First Embodiment.

The present embodiment is described as a variation of First Embodiment, but Second Embodiment can also be similarly varied.

### (Fourth Embodiment)

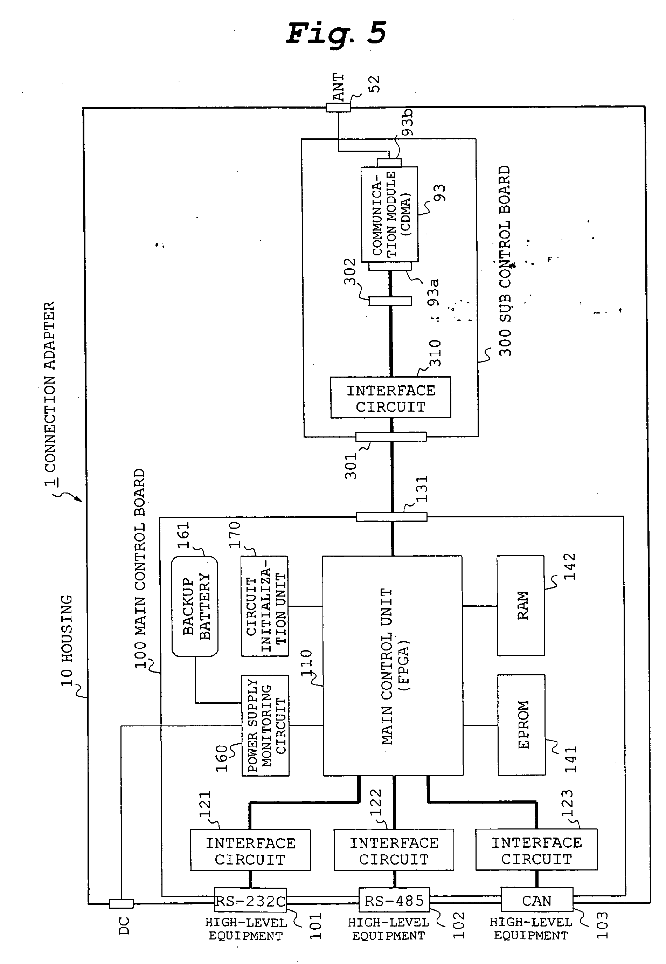

A connection adapter according to Fourth Embodiment of the present invention will be described with reference to Fig. 5. Fig. 5 is a schematic configuration diagram of the connection adapter.

The difference of the connection adapter according to the present embodiment from that of Third Embodiment lies in the method for identifying the communication modules 92, 93 and 94 connected to the main control board 100 via the connector 131. Specifically, in the present embodiment, the sub control boards 200 and 300 described above in First Embodiment are directly used without storing identification information in the sub control boards 200 and 300; the main control unit 110 identifies based on an input/output signal from or to the communication modules 92, 93 and 94 connected thereto, which one of the communication modules has been connected. More specifically, the communication modules 92, 93 and 94 each perform inputting/outputting based on the respective specific standards, so the difference of standard between the communication modules is preliminarily comprehended to perform determination based on the difference. More specifically, the type of communication device is identified based on physical layer features, such as output signal voltage, or further based on the features of higher layer protocols. For example, when an AT command is supported by the communication module 92 of PDC standard and not supported by the other communication module 93 and 94, then the other communication module 93 and 94 send back an error response. In this case, if a normal response is received in response to this AT command, the main control unit 110 can identify that the communication module 92 of PDC standard has been connected. In other aspects, the configuration is the same as that of Third Embodiment.

Similarly to Third Embodiment, in the connection adapter 1 according to the present embodiment, the communication modules 92, 93 and 94 connected to the main control board 100 can be automatically identified. Accordingly, when mounting or replacing a module, it is possible to prevent a setting for a different model from occurring. Other operations and effects are the same as those of First and Third Embodiments.

The embodiments of the present invention are described above in detail. The present invention is, however, not limited thereto. For example, in each embodiment described above, as an example of communication module, ones having PDC standard, CDMA standard and PHS standard, respectively, are taken. However, a communication module of another standard can also be used to implement the present invention. Similarly, as for the interface standard in the high-level equipment side, also, one other than the above described standards can be applied.

According to the embodiments describe above, the sub control boards 200 and 300 are provided with the interface circuits 210 and 310 for each communication module 92 and 93, respectively. However, each interface circuit may be implemented as PLD along with the main control unit 110. This facilitates size reduction of the connection adapter.

According to the embodiments describe above, the connection adapter 1 is provided with a plurality of types of connectors 101, 102 and 103, and can thus handle a plurality of types of high-level equipment . However, only one specific type of connector may be provided.

According to the embodiments describe above, the main control unit 110 is implemented using FPGA being one kind of PLD. However, the main control unit 110 may be implemented using another PLD such as CPLD (Complex Programmable Logic Device). Particularly, the use of nonvolatile device is preferable in terms of size reduction and simplification of the unit. Alternatively, the main control unit 110 may be implemented using a plurality of typical integrated circuits according to the block diagram of Fig. 2.

## Claims

1. A connection adapter comprising:
a first interface (121,122,123,411,412,413) for connection to high-level equipment with a communication interface;
a second interface (210,310) for connection to a communication device (92,93) with an interface for high-level equipment, connected to a radio packet communication network; and
a conversion circuit (110) performing mutual conversion between an input/output signal from or to the high-level equipment connected to the first interface (121,122,123,411,412,413), and an input/output signal from or to the communication device (92,93) connected to the second interface (210,310),
wherein the conversion circuit (110) receives or supplies from or to the high-level equipment a signal simulating the communication device (92,93,94) connectable to the high-level equipment, and the conversion circuit (110) receives or supplies from or to the communication device (92,93,94) a signal simulating the high-level equipment connectable to the communication device (92,93,94).

2. The connection adapter according to claim 1, wherein the conversion circuit (110) is connectable to a plurality of the second interfaces (210,310) corresponding to a plurality of types of communication devices (92,93), respectively, having a different communication format.

3. The connection adapter according to claim 1, wherein the conversion circuit (110) is connectable to a plurality of the first interfaces corresponding (121,122,123,411,412,413) to a plurality of types of high-level equipment, respectively, having a different input/output format.

4. The connection adapter according to claim 1, wherein:
the conversion circuit (110) and the first interface (121,122,123) are mounted on a first board (100); and
the second interface (210,310) is mounted on a second board (200,300) attachable/detachable to the first board (100).

5. The connection adapter according to claim 1, wherein:
the conversion circuit (110) is mounted on a first board (100); the second interface (210,310) is mounted on a second board (200,300) attachable/detachable to the first board (100); and
the first interface (411,412,413) is mounted on a third board (400) attachable/detachable to the first board (100).

6. The connection adapter according to claims 4 and 5, wherein the conversion circuit (110) includes identification means for identifying the type of communication device (92,93,94) connected via the second interface (210,310).

7. The connection adapter according to claim 6, wherein:
the second board (300) includes an identification information storage unit (320) for storing the information on type of communication device (93) connected to the second interface (310); and
the identification means identifies the type of communication device (92,93,94) based on the identification information stored in the identification information storage unit (320).

8. The connection adapter according to claim 6, wherein the identification means identifies the type of communication device (92, 93, 94) based on an output signal sent from the communication device connected (92,93,94) via the second interface (210,310).

9. The connection adapter according to claim 1, wherein at least the conversion circuit (110) is implemented using PLD (Programmable Logic Device).

10. The connection adapter according to claim 1, wherein at least the conversion circuit (110) and the second interface (210,310) are implemented using PLD (Programmable Logic Device).

11. The connection adapter according to claim 1, wherein the connection adapter supplies power to the communication device (92, 93, 94) via the second interface (210,310), and further comprises:
a backup battery (161); and
a power supply monitoring circuit (160) for switching to the backup battery (161) as a source of power supply when an interruption of power supply from the outside is detected.

12. The connection adapter according to claim 11, wherein when the power supply monitoring circuit (160) detects an interruption of power supply from the outside, the conversion circuit (110) notifies the interruption of power supply to a predetermined communication destination by using the communication device (92, 93, 94) connected to the second interface (210,310).

13. The connection adapter according to claim 11, wherein while the power supply monitoring circuit (160) detects an interruption of power supply from the outside, when a signal sent from a predetermined communication destination to the high-level equipment is detected, the ' conversion circuit (110) sends an ACK on behalf of the high-level equipment.

14. The connection adapter according to claim 11, wherein when the power supply monitoring circuit (160) detects a recovery of power supply, the conversion circuit (110) notifies an initiation of power supply to a predetermined communication destination by using the communication device (92,93,94) connected to the second interface (210,310).
